# EUROPEAN PATENT APPLICATION

(11) **EP 3 457 374 A2**
(43) Date of publication of application: **20.03.2019**
(21) Application number: 18194956.1
(22) Date of filing: 17.09.2018
(51) Int. Cl.: G08B 29/14

(54) **METHOD AND APPARATUS FOR MAPPING DEVICES BY USING POSTED MAPS**

(30) Priority: 18.09.2017 US 201715707154
(71) Applicant: Tyco Fire & Security GmbH, 8212 Neuhausen am Rheinfall (CH)
(72) Inventor: Norton, Alexandra K, Duxbury, MA 02332 (US); Brown, Tyler H, New Haven, CT 06511 (US); Rosewall, Sam, Vista, CA 92084 (US)
(74) Representative: Wright, Howard Hugh Burnby

(57) **Abstract**

A service management system facilitates service on building management systems. A mobile computing device captures an image of an evacuation map posted in a building and sends the image to a service workflow module of a connected services system, which returns a map based on the image. During service on devices of the building management system, positions of the devices are indicated on the map, and map position information is generated and stored in a connected services database. Graphical elements representing devices assigned positions on the map are overlaid on the map. Upon selection, the graphical elements display a menu of service-related actions. The visual characteristics of the graphical elements varies based on the type and current status of the devices.

## Description

### BACKGROUND OF THE INVENTION

Building management systems such as building automation systems, fire alarm systems and intrusion systems are often installed within a premises such as commercial, residential, or governmental buildings. Examples of these buildings include offices, hospitals, warehouses, public infrastructure buildings including subways and bus terminals, multi-unit dwellings, schools or universities, shopping malls, government offices, and casinos.

Fire alarm systems typically include fire control panels that function as system controllers. Fire detection/initiation devices and alarm notification devices are then installed, distributed throughout the buildings and connected to the panels. Some examples of fire detection/initiation devices include smoke detectors, carbon monoxide detectors, flame detectors, temperature sensors, and/or pull stations (also known as manual call points). Some examples of fire notification devices include speakers, horns, bells, chimes, light emitting diode (LED) reader boards, and/or flashing lights (e.g., strobes).

The fire detection devices monitor the buildings for indicators of fire. Upon detection of an indicator of fire such as smoke or heat or flames, the distributed device is activated and a signal is sent from the activated distributed device to the fire control panel. The fire control panel then initiates an alarm condition by activating audio and visible alarms of the fire notification devices of the fire alarm system, which are also distributed around the building. Additionally, the fire control panel will also send an alarm signal to a monitoring station, which will notify the local fire department or fire brigade.

Intrusion systems typically include intrusion panels and their own distributed devices. The distributed monitoring devices detect indications of intrusions, building security breaches and unauthorized access at or within the building and report to the intrusion panels. Examples of monitoring devices include motion sensor devices, door and window relays, thermal sensors, and surveillance camera devices that communicate with the intrusion panel over a security network. Motion sensor devices can detect intrusions and unauthorized access to the premises, and send indications of the intrusions to the security panel. The surveillance camera devices capture video data of monitored areas within the premises, in examples.

Building automation systems will typically include one or more building automation control panels and distributed devices that control and monitor the physical plant aspects of a building and aspects of business-specific electrical, computer, and mechanical systems. The physical plant typically includes heating, ventilation, and air conditioning (HVAC) systems, elevators/escalators, lighting and power systems, refrigeration and coolant systems, and air and/or water purification systems, in examples. HVAC systems typically include air handlers and systems of ducts and vents for circulating air throughout the building. Business-specific systems include computer systems, manufacturing systems that include various types of computer-aided machinery and test equipment, and inventory control and tracking systems, in examples.

Building management systems require service, including installation, repair, testing, inspection, and compliance testing. When the systems are initially installed, the panels are typically located in a secure part of the building. Then, the distributed devices are installed throughout the building. The panels and the distributed devices must then be interconnected. Wired systems are often used. Although, in some cases wireless links are used to provide interconnection. Then later in the lifecycle, repair may be required. Sensor-type distributed devices can be damaged. They can also become dirty. Inspection and compliance testing is also mandatory for many types of building management systems. Fire alarm systems must be tested typically on a yearly basis, for example.

Recently, it has been proposed to use connected services systems to monitor fire alarm systems. Connected services system are remote systems that communicate with the building management systems and are sometimes administered by separate business entities than the owners and/or occupants of the buildings, which contain the building managements systems. For example, the connected services system can be administered by a building management system manufacturer and/or an entity providing service on the building management systems.

Often during service, the connected services systems communicate with the control panel of a fire alarm system and mobile computing devices operated by on-site technicians. This has allowed the control panels to report status information, including devices events from distributed devices connected to the panels, to the connected services systems. Similarly, this has allowed the mobile computing devices, via mobile applications, to display information about the fire alarm systems, receive local service data, including inspection results, service narrative information and/or service completion status for different distributed devices, and send the local service data to the connected services system. By facilitating communication between the control panels and mobile computing devices, and by collecting and storing device events and local service data, connected services systems have been used to facilitate service on fire alarm systems.

For example, typically, the fire alarm devices are periodically tested by technicians (e.g., monthly, quarterly, or annually depending on fire or building codes) to verify that the distributed devices are physically sound, unaltered, working properly, not obstructed, properly labeled, and located in their assigned locations.

This testing of the distributed devices is often accomplished with a walkthrough test. During an inspection, the connected services system receives device events from the control panel, which originated from the distributed devices and local service data from a mobile computing device, including inspection results. Illustrated by way of example, upon activation of a fire alarm device, the control panel receives a signal from the activated device. Event data are generated and sent to the connected services system. The event data are stored and/or logged by the connected services system and also sent to the mobile computing device in real-time. The on-site technician is able to view the event data and verify that the fire alarm device is physically sound, unaltered, working properly, and in its assigned location. The mobile computing device then sends local service data including inspection results to the connected services system, and the technician moves to test the next fire alarm device.

### SUMMARY OF THE INVENTION

Third-party technicians are often used to service these building management systems. Sometimes the service are mandated by regulations, e.g., inspection of a fire alarm system. Other times, devices need to be repaired or replaced. Such service calls usually require technicians to service devices located throughout the building.

It is common, especially for newer buildings, to have maps showing where the various devices are installed. When the technicians have access, they can refer to such maps to locate the devices. However, in some instances, those maps have been lost or are simply inaccessible.

In older buildings, these maps may not exist. They could have been lost years ago. Possibly the building management systems have been updated and/or replaced making the maps irrelevant. In other cases, they simply do not exist.

On the other hand, building evacuation maps are often mandated by the building codes, especially for buildings open to the public. These maps will be typically posted on the walls for the public view, especially in the case of an emergency. These evacuation maps are posted at regular intervals throughout buildings.

Other types of maps may also be available. For example, there might be blueprints and other large-format drawings on paper that a technician might be able to request. In another example, satellite images of buildings can be obtained using services such as Google Maps.

However, many such buildings do not have maps indicating the locations of the devices requiring service. A system would be desirable that allows technicians performing service to indicate the positions of serviced devices on a map of the building and for other technicians performing service on the same building to have access to those maps.

The present invention allows technicians to map the location of devices in a building by using available pre-existing maps (for example, evacuation maps). The maps can be in an electronic or printed format. The technician captures an image of the map for the area they are servicing, such as with a mobile computing device and possibly uploads it to a connected services system. The technician can then superimpose graphical elements representing devices (for example, icons or emoji's) onto the map indicating where particular devices are generally located. Each graphical element represents a specific device in the building, and the graphical elements' visual characteristics will correspond to the types of devices they represent and to the current status of the devices.

The graphical elements are also selectable, presenting a menu of options specific to each device for technicians to select, including inputting local service data and activating devices, among other examples. Technicians can thus discern efficiently what type of device it is and also command it to perform certain functions such as self-testing (for example, during a walkthrough inspection). In one embodiment, such commands can be initiated by tapping the graphical element and then selecting the desired function to be executed.

In addition, graphical elements can represent other features of the building, such as certain rooms that each contain multiple devices. These can be added to the map in the same way that graphical elements representing devices are added.

Such a system can also be used for calculating the most efficient path through the building for servicing a set of devices. This route can be provided to technicians via a mobile computing device. In examples, the mobile computing device can be a smart phone executing a mobile application or dedicated service device.

In general, according to one aspect, the invention features a service management system for facilitating servicing of a building management system of a building. The service management system includes mobile computing devices and a service workflow module. The mobile computing devices render graphical user interfaces on touchscreen displays. The graphical user interfaces display maps of the building, detect input indicating positions of devices of the building management system on the displayed maps, generate map position information of the devices, and display graphical elements on the maps representing the devices at the indicated positions. The service workflow module stores the map position information.

In embodiments, the maps are based on captured images of fire evacuation or other printed maps of the areas of the building. The graphical user interfaces include device assignment panes, which displaying graphical elements representing devices for which positions on the maps have not been indicated. The graphical user interfaces detect input indicating positions of different devices of the building by detecting continuous contact with the touchscreen displays starting at regions containing the graphical elements displayed by the device assignment panes, moving toward and onto the displayed maps, and ending at regions of the displayed maps containing the indicated positions of the devices. The graphical user interfaces can further include selection panes, which are displayed in response to selection of the graphical elements on the maps representing the devices. In response to selection of actions indicated by the selection panes, information and/or instructions might sent from the mobile computing devices to the service workflow module. Visual characteristics of the graphical elements correspond to different types and statuses of devices. The service workflow module generates service route information based on previously and/or recently serviced devices, and specific regions of the maps are displayed based on the service route information.

In general, according to another aspect, the invention features a method for facilitating servicing of building management systems of buildings. Graphical user interfaces including maps of the buildings are rendered on mobile computing devices, and input indicating positions of different devices of the building management systems on the displayed maps are detected. Graphical elements representing the devices are displayed at the indicated positions.

In general, according to another aspect, the invention features a service management system for facilitating servicing of a building management system of a building. The service management system includes mobile computing devices for capturing images of posted maps in the building and a connected services database for storing map position information of the devices based on the captured images of the posted maps.

In general, according to another aspect, the invention features a method for servicing building management systems of a building. Images of posted maps in the building are captured, and map position information of the devices based on the captured images of the posted maps is stored.

In general, according to another aspect, the invention features a method for generating maps of buildings, comprising capturing one or more images of posted maps throughout the building containing floor plan details of the buildings and combining the images with satellite images of the buildings.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Fig. 1 is a schematic diagram of a service management system according to an embodiment of the current invention;
Fig. 2 is a diagram of exemplary tables of the connected services database;
Fig 3 is a diagram illustrating how the map is generated by the service workflow module according to one embodiment of the invention;
Fig. 4 is a sequence diagram illustrating the process by which the map and map position information for devices are generated and stored;
Fig. 5 is a sequence diagram illustrating the process by which service route information is calculated by the service workflow module and utilized by the mobile computing device to display the map at different positions;
Fig. 6A is a diagram of an exemplary screen of the graphical user interface of the mobile computing device;
Fig. 6B is a diagram of an exemplary screen of the graphical user interface after a device indicated by the device assignment pane has been assigned a position on the map in the map pane;
Fig. 7 is a diagram of an exemplary screen of the graphical user interface including a selection pane; and
Fig. 8 is a diagram of an exemplary screen of the graphical user interface showing how visual characteristics of graphical elements vary based on the status of the represented devices.

### DETAILED DESCRIPTION OF THE PREFERRED EMBODIMENTS

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

As used herein, the term "and/or" includes any and all combinations of one or more of the associated listed items. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

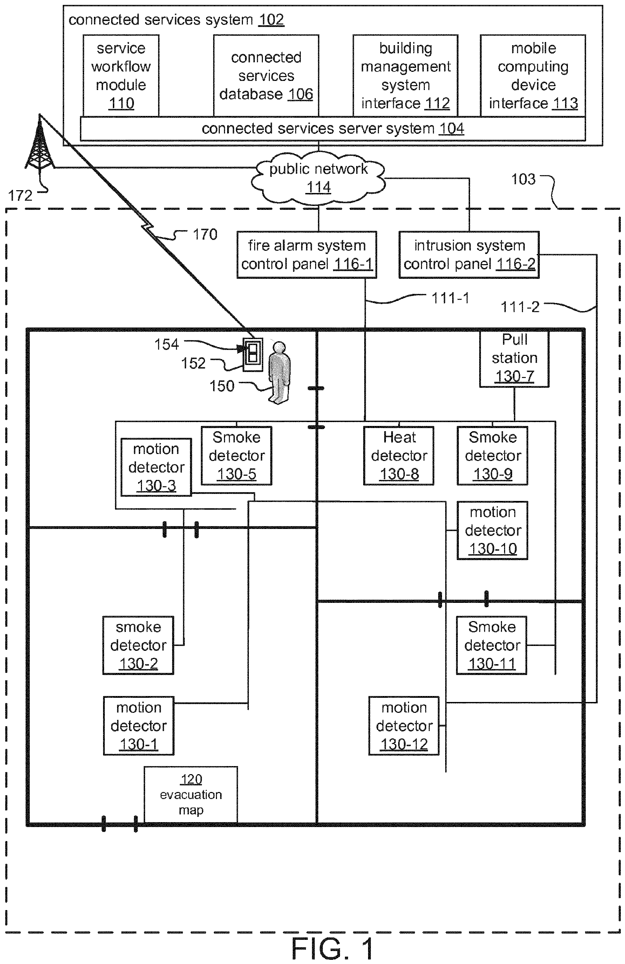

Fig. 1 is a schematic diagram of a service management system according to an embodiment of the current invention.

The service management system includes a connected services system 102, which, at a high level, communicates with building management systems installed within buildings 103 of various client entities, typically. Examples of client entities include residential, commercial, or governmental companies or agencies. Examples of the buildings include offices, hospitals, warehouses, retail establishments, shopping malls, schools, multi-unit dwellings, government buildings, or casinos, to list a few examples.

In general, the building management systems include control panels 116 and distributed devices 130. The control panels 116 direct the function of the respective building management system by determining and displaying the operational status of or sensor data from the distributed devices 130.

The distributed devices 130 are connected to their respective control panels 116 via safety and security wired and/or wireless networks 111 of the building 103. These networks 111 support data and/or analog communication between the distributed devices 130 and the respective control panels 116. In some embodiments (not illustrated), the distributed devices 130 could all be connected to the same safety and security network 111.

In the illustrated example, distributed devices 130 of the fire alarm system are connected to a fire alarm system control panel 116-1 via safety and security network 111-1 and are slave devices of the panel.

The distributed fire alarm devices 130 include alarm initiation devices including smoke detectors 130-2, 130-5, 130-9, 130-11, heat detectors 130-8 and manually activated devices such as pull stations 130-7. Alarm initiation devices can also include devices that are not depicted in the illustrated example, including call points and carbon monoxide detectors. The alarm initiation devices monitor the buildings for indicators of fire. Upon detection of indicators of fire, device signals are sent from the alarm initiating devices to the control panel. The device signals are typically alarm signals and/or analog values. The alarm signals are used to signal the control panel 116-1 that a fire has been detected. Alternatively, some devices provide analog values to indicate measured conditions. In one example, temperature sensors provide analog values for measured temperatures. In another example, smoke sensors provide analog values indicating smoke obscuration levels. The control panel 116-1 then determines if the analog values are indicative of a fire. Additionally, in some examples, the alarm initiation devices provide both alarm signals and analog values.

The distributed fire alarm devices 130 could further include fire notification devices (not illustrated), which notify occupants of the building 103 of a potential fire and generally include speakers, horns, bell, chimes, light emitting diode (LED) reader boards, and/or flashing lights (e.g., strobes), to list a few examples. In response to detection of indicators of fire, the fire alarm system control panel 116-1 initiates an alarm state, which activates the fire notification devices.

Similar to the fire alarm system, distributed devices 130 of the intrusion system are connected to an intrusion system control panel 116-2 via a second network 111-2.

The distributed intrusion devices 130 include devices for detecting the presence of unauthorized individuals in the building 103, including motion detectors 130-1, 130-3, 130-10, 130-12 and other devices (not illustrated) such as security cameras, door and window relays and network video recorders, among other examples. Upon detection of the presence of unauthorized individuals, device signals are sent from the motion detectors 130-1, 130-3, 130-10, 130-12 to the intrusion control panel 116-2.

In the illustrated example, a technician 150 holding a mobile computing device 152 is also shown. The technician 150 is an individual performing service on the building management systems, including employees of entities occupying the building 103, property managers, building management system manufacturers and/or providers of service for building management systems.

Also included is an evacuation map 120, which is a map of the building or an area of the building. The evacuation map 120 is attached to a wall of the building 103 such that it is generally visible to occupants of the building. Generally, these maps would be displayed at regular intervals throughout the building in accessible locations such as hallways, lobbies or stairways, among other examples. In hotels, each room will typically have its own map.

In the illustrated example, the mobile computing device 152 is a smartphone device. Alternatively, the mobile computing device 152 could be a laptop computer, tablet computer, phablet computer (i.e., a mobile device that is typically larger than a smart phone, but smaller than a tablet), smart watch, or specialized service and/or testing device to list a few examples. The mobile computing device 152, which is operated by the technician 150, presents information about the building management systems, receives local service data from the technician, including inspection results, service narrative information and/or service completion status for different devices, and sends the local service data to the connected services system 102. The mobile computing device 152 also captures images of evacuation maps 120, preferably via a camera feature of the mobile computing device 152, and/or downloads satellite images of the building 103 such as those obtained from services such as Google Maps, for example, and sends the images to the connected services system 102, which returns maps based on the images. The mobile computing device 152 displays the maps along with graphical elements, such as icons or emoji's, representing different devices via a graphical user interface (GUI) 154. The mobile computing device 152 displays the maps at different positions based on service route information from the connected services system 102. The mobile computing device 152 also receives input from the technician 150 indicating positions on the map representing device locations and generates and sends map position information to the connected services system 102.

The present system can be extended to other types of building management systems. For example in another implementation the panel is a building automation panel such as a panel that might control building climate including HVAC.

Each of the fire alarm system control panel 116-1, intrusion system control panel 116-2, and mobile computing device 152, are connected to the connected services system 102 via a leased data connection, private network and/or public network 114, such as the internet. In some cases, the control panels 116 have been given network connectivity to communicate with the connected services system 102; in other cases, testing computers connected to the control panels 116 function as gateways. The mobile computing device 152 connects to the public network 114 via a wireless communication link 170 to a cellular radio tower 172 of a mobile broadband or cellular network or public and/or private wired data networks such as an enterprise network, Wi-Max, or Wi-Fi network, for example.

The connected services system 102 is typically implemented as a cloud system. It can be run on a proprietary cloud system or implemented on one of the popular cloud systems operated by vendors such as Alphabet Inc., Amazon, Inc. (AWS), or Microsoft Corporation.

As a result, the connected services system 102 typically operates on a connected services server system 104. In some cases, this server system 104 is one or more dedicated servers. In other examples, they are virtual servers.

The connected services server system 104 executes modules, including a service workflow module 110. Each of these modules is associated with separate tasks. In some cases, these modules are discrete modules or they are combined with other modules into a unified code base. They can be running on the same server or different servers, virtualized server system, or a distributed computing system.

The service workflow module 110 functions as an application server that communicates with the mobile computing device 152. The service workflow module 110 provides the steps necessary for the technician 150 to service the building management system. The service workflow module 110 further receives the local service data provided by the technician 150 indicating that a particular panel 116 or distributed device 130 of the building management system has been serviced. This local service data may further include inspection results, narrative description from the technician describing the state of a particular panel 116 or distributed device 130, a description of its particular location, and/or notes concerning that panel or distributed device that might be useful for the next service. Further, the service workflow module 110 also receives device events from the particular panel 116 or distributed device 130 undergoing service and combines the device events with the local service data and then stores the resulting service events to a connected services database 106 in connection with the particular service being carried out on the building management system.

Additionally, the service workflow module 110, in response to receiving images of evacuation maps or other maps such as satellite images of the building 103, processes the image or multiple images of the building 103 to generate maps, and returns the maps to the mobile computing device 152. The service workflow module 110 also calculates optimal service routes for buildings 103 based on the devices to be serviced, map position information for those devices, and recently serviced devices, and sends service route information to the mobile computing device 152.

The connected services database 106 provides customer specific installation information to the service workflow module 110. In particular, the connected services database 106 includes lists of control panels 116 installed at various customer premises, the distributed devices 130 maintained by those panels, and historical test data associated with those panels and distributed devices. Additionally, the connected services database 106 stores the maps associated with specific buildings 103 and the map position information associated with specific distributed devices 130 and control panels 116.

The connected services system 102 also includes a building management system interface 112 and a mobile computing device interface 115.

The building management system interface 112 operates as the interface between the service workflow module 110 and the particular control panel 116 undergoing service. In particular, the building management system interface 112 converts instructions from the service workflow module 110 into instructions that are formatted into the protocol implemented by the particular panel. Additionally, the building management system interface 112 receives information such as device events from the current control panel 116 or distributed device 130 under service and converts those device events into a uniform format that can be consumed by the service workflow module 110, regardless of the underlying protocol implemented by the panels and distributed devices.

The mobile computing device interface 115 operates as an interface between the service workflow module 110 and mobile computing devices 152 used by technicians 150 performing the service. In particular, the mobile computing device interface 115 puts the map images and map position information into a uniform format that can be consumed by the service workflow module 110.

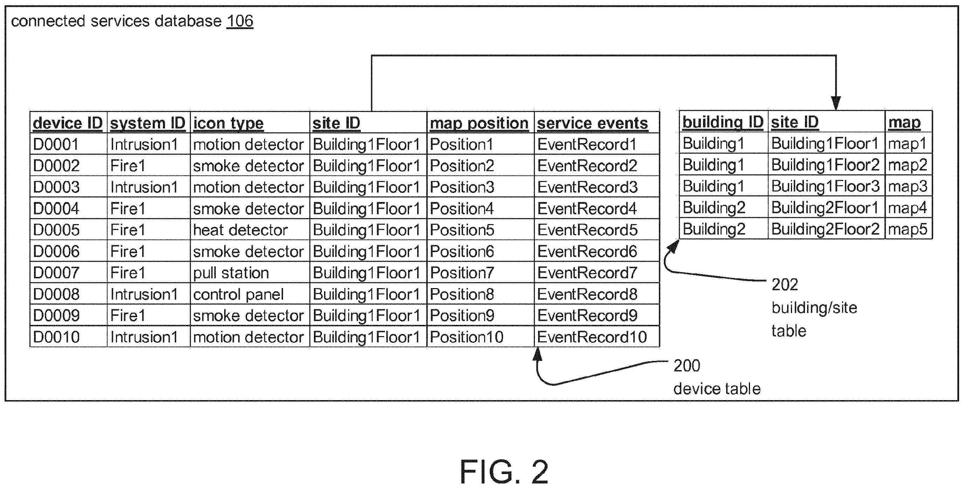

Fig. 2 is a diagram of exemplary tables of the connected services database 106, including a device table 200 and a building/site table 202.

In general, the building/site table 202 stores maps corresponding to different sites of different buildings 103. Sites correspond to the zones within the buildings 103 that are depicted in the evacuation maps. Depending on factors such as building size, buildings 103 can range from having only one site to having several. The building/site table 202 includes columns for a building ID, site ID, and map. The building ID is a unique identifier for a specific building 103. The site ID is a unique identifier for a specific site (for example, a floor of a building). The map is based on the evacuation map 120 and can point to a specially formatted image file, for example.

In general, the device table 200 stores map position information and associated site maps for different devices such as distributed devices 130 and/or control panels 116. The device table 200 includes columns for a device ID, icon type, site ID, map position, and service events. The device ID is a unique identifier for a specific distributed device 130 or control panel 116. The system ID is a unique identifier for a specific building management system. The icon type determines visual characteristics of the graphical elements representing the devices on the site map, for example, based on the type of device. The site ID corresponds to a specific building 103 or zone of a building, referring to site ID's stored in the building/site table 202. The map position is an indicator of the position on the site map corresponding to the location of the device in the building 103, and thus determines where on the site map the graphical element representing the device is overlaid. Finally, the service events refer to records for services performed on the device. The service events can include device events and local service data, among other examples.

In the illustrated example:
The map "map1" corresponds to the site "Building1Floor1" which corresponds to the first floor of the building "Building1".

Device "D0001" is associated with the site "Building1Floor1", indicating that a graphical element associated with motion detectors should be overlaid on "map1" at a position corresponding to "Position1".

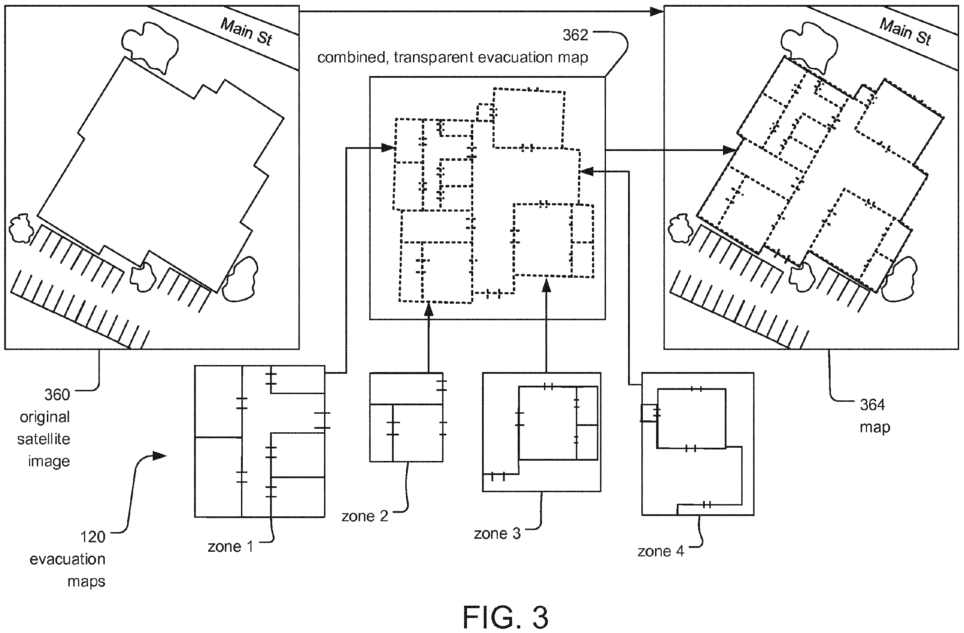

Fig. 3 is a diagram illustrating how the map is generated by the service workflow module 110 according to one embodiment of the invention.

In general, the service workflow module 110 receives from the mobile computing device 152 one or more source images, including, for example, evacuation maps 120 other floor plans such as blueprints, and/or a satellite image of the building 103. The service workflow module 110 then combines these source images by stitching the images together, resizing the images to have the same scale, rotating the images, and/or overlaying transparent versions of particular images over others, among other examples.

In the illustrated example, the source images received by the service workflow module 110 include an original satellite image 360 depicting a top view of the building and its surroundings, and a series of evacuation maps 120 from exemplary zones 1 through 4 of the building 103.

The evacuation maps 120 are stitched together to form a combined evacuation map 362 depicting a full floor plan view of one floor of the building 103, according to the contents of the individual evacuation maps 120. The combined evacuation map 362 is then resized to match the scale of the original satellite image 360, rotated such that the alignment of the building 103 as depicted in the combined evacuation map 362 matches that of the original satellite image 360. The transparency or opacity of the combined evacuation map 362 image is also increased such that image layers under that of the combined evacuation map 362 are visible through the combined evacuation map's 362 layer. The resulting image is overlaid onto the original satellite image 360, forming the map 364, which depicts both the top view of the building 103 and its surroundings and the floor plan details of the building 103.

The map 364 is then stored in a predetermined format and associated with identification information for the depicted site and/or building 103 in the building/site table 202 of the connected services database 106.

In different examples, the same original satellite image 360 is combined with different evacuation maps 120 to generate the map 364 for different floors or wings of the same building 103.

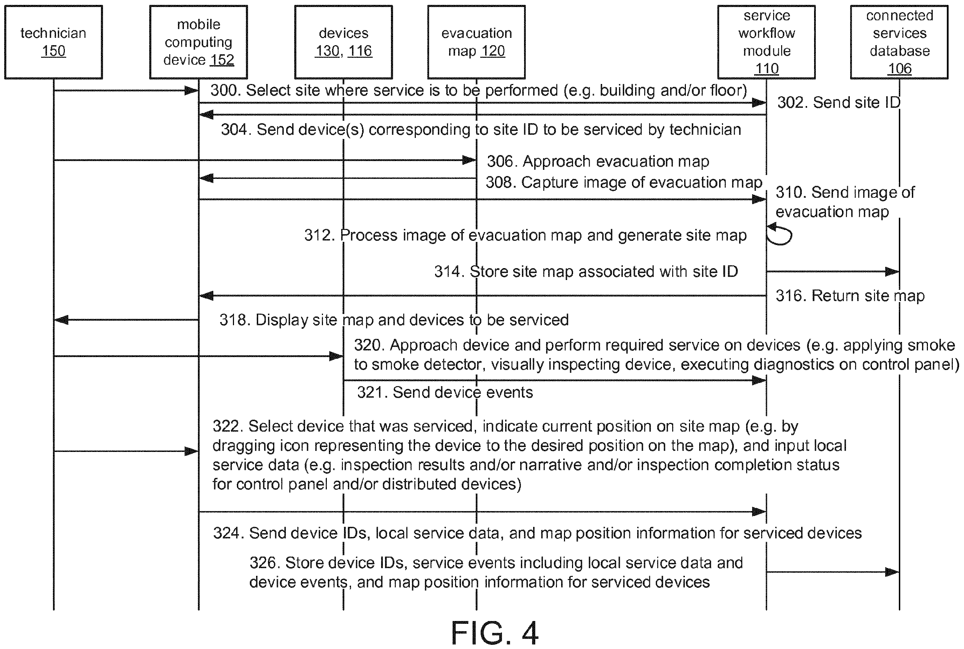

Fig. 4 is a sequence diagram illustrating the process by which the map and map position information for devices are generated and stored.

In step 300, a site is selected by the technician 150 and the site ID associated with the selected site is sent to the service workflow module 110 in step 302. In response, devices (such as distributed devices 130 or control panels 116) corresponding to the site ID are returned in step 304.

In step 306, the technician 150 approaches the evacuation map 120 corresponding to the selected site, and in step 308, the mobile computing device 152 captures an image of the evacuation map 120, which it then sends to the service workflow module 110 in step 310.

The service workflow module 110 processes the image of the evacuation map 120, for example, by converting it to a specialized image format, and generates a map in step 312. In one example, generating the map includes combining multiple map images from different sources, such overlaying a translucent version of the evacuation map 120 or other maps such as blueprints or floor plans, over a satellite image of the building 103. In another example, the source image of the map is a satellite image of the building 103 for which different maps (based on the same satellite image) are generated for each floor of the building 103. The map is stored in the connected services database 106 in step 316 and specifically the building/site table 202. For the map's record, the building is indicated in the Building ID column, the floor that building, for example, is indicated in the Site ID column. Finally, the map or a link to the map is stored in the map column.

The processed images of the map is returned to the mobile computing device 152 in step 316. In step 318, the mobile computing device displays the map and a list of devices to be serviced. This information is drawn from the device table 200 and the building/site table 202.

In step 320, the technician 150 approaches a device and performs the required service. This can include applying smoke (to a smoke detector), visually inspecting the device, or executing diagnostics on a control panel, among other examples. In response, in step 321, the serviced distributed device 130 or control panel 116 sends device events to the service workflow module 110. That data is stored to the recorded associated with that device.

In step 322, the technician 150 selects the serviced distributed device 130 or control panel 116 and indicates its current position on the map via the mobile computing device 152. This is done by dragging a graphical element representing the serviced device to a desired position on the map, for example. The technician also enters local service data.

In step 324, the mobile computing device 152 sends the device IDs corresponding to the serviced distributed devices 130 and/or control panels 116, the local service data, and map position information based on the selected map positions for each serviced device to the service workflow module 110, which sends the information to be stored into the connected services database 106.

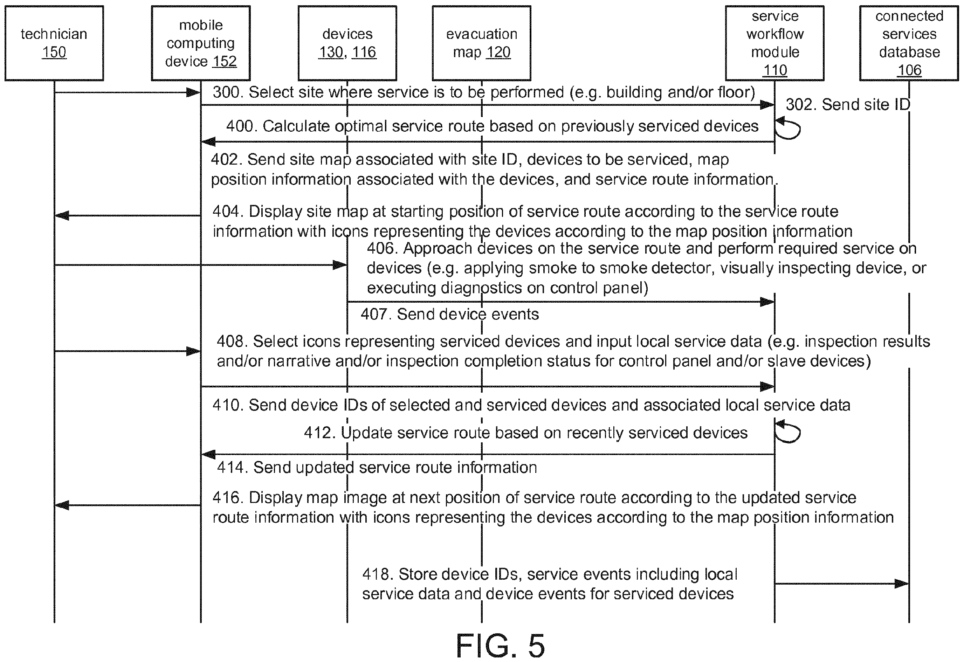

Fig. 5 is a sequence diagram illustrating the process by which service route information is calculated by the service workflow module 110 and utilized by the mobile computing device 152 to display the map at different positions.

First, the site is selected as previously described in steps 300 and 302.

In step 400, the service workflow module calculates an optimal service route based on stored map position information for previously serviced distributed devices 130 and control panels 116. In step 402, the map associated with the selected site ID, the devices to be serviced, and map position information associated with those devices is sent to the mobile computing device along with the service route information.

In step 404, the mobile computing device 152 displays the map at a starting position based on the service route information, and graphical elements representing the distributed devices 130 and control panels 116 to be serviced are overlaid on the map based on the map position information from the map position column of the device table 200.

In step 406, the technician approaches the distributed devices 130 and control panels 116 to be serviced and performs the required service. In response, the serviced devices send device events to the service workflow module 110. After servicing each device, the technician 150 then selects the device on the map and enters the local service data in step 408.

In step 408, the device IDs of the serviced distributed devices 130 and/or control panels 116 are sent to the service workflow module 110 along with the associated local service data.

The service workflow module 110 updates the service route in step 412 based on the recently serviced devices received from the mobile computing device 152, and, in step 414, sends updated service route information to the mobile computing device 152.

In step 416, the mobile computing device 152 displays the map at a new position based on the updated service route information, corresponding to the next device requiring service. In this way, the technician 150 is guided through the building 103 along the optimal service route determined by the service workflow module 110.

Finally, in step 418, the device ID and service events are stored in the device table 200 of the connected services database 106.

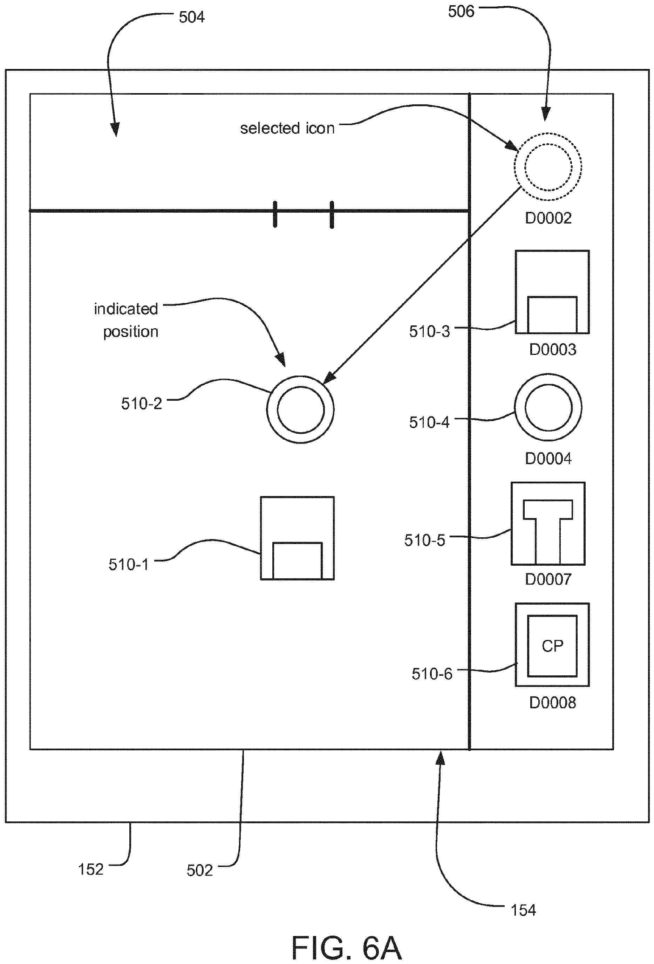

Fig. 6A is a diagram of an exemplary screen of the GUI 154 rendered on the mobile computing device 152. The GUI 154 is rendered on a touchscreen display 502 of the mobile computing device 152 and includes a map pane 504 and a device assignment pane 506.

The map pane 504 displays an active region of the map. The active region of the map is based on which particular region is currently visible in the map pane 504, which can be changed, for example, by the touchscreen display 502 detecting gestures corresponding to actions such as dragging the map or zooming into or out of a particular region of the map. Graphical elements 510 representing distributed devices 130 and/or control panels 116 are overlaid on the map in particular regions based on the map position information associated with each device. The positions of the graphical elements 510 overlaid on the map in the map pane 504 are static with regard to the map such that they move with the map as the active region changes. In embodiments, the sizes of the graphical elements 510 are static or change based on the scale of the map as determined by the active region currently displayed in the map pane 504.

The device assignment pane 506 displays graphical elements 510 representing distributed devices 130 and control panels 116 for which map position information has not been generated.

Between the map pane 504 and the device assignment pane 506, the GUI 154 receives input via the touchscreen display 502 indicating the positions of distributed devices 130 and/or control panels 116 on the map.

In one example, the GUI 154 receives such input by detecting continuous contact with the touchscreen display 502 starting at a region containing a graphical element 510 displayed by the device assignment pane 506, moving toward and onto the map in the map pane 506, and ending at a region of the map containing the indicated position of the device. In this way, the technician 150 can drag and drop graphical elements 510 representing devices onto the map.

In another example, the GUI 154 receives such input by detecting contact with the touchscreen display 502 at the region of the map displayed in the map pane 504 containing the indicated position of the device and then subsequently detecting contact at the region of the device assignment pane 506 containing a graphical element 510. In this way, the device assignment pane 506 serves as a virtual keyboard from which the technician 150 can select graphical elements 510 representing devices.

The visual characteristics of the graphical elements 510 correspond to different types of devices. For example, graphical elements 510-2 and 510-4, depicted as two concentric circles, represent smoke detectors 130-2, 130-5, 130-9, 130-11, graphical elements 510-1 and 510-3, depicted as a rectangle with a smaller rectangle within it, represent motion detectors 130-1, 130-3, 130-10, 130-12, graphical element 510-5, depicted as a rectangle with a T-shape within it, represents a pull station 130-7, and graphical element 510-6, depicted as a rectangle with a smaller rectangle and the text "CP" within it, represents a control panel 116.

In the illustrated example, the map pane 504 includes graphical elements 510-1 and 510-2, representing a motion detector and a smoke detector respectively. Graphical element 510-2 has been dragged from the device assignment pane 506 to the indicated position on the map in the map pane 504. The device assignment pane 506 includes graphical elements 510-3, 510-4, 510-5, and 510-6, representing a motion detector, smoke detector, pull station and control panel respectively. Identifying text (corresponding to the device ID of each device represented) is displayed with each graphical element 510 in the device assignment pane 506.

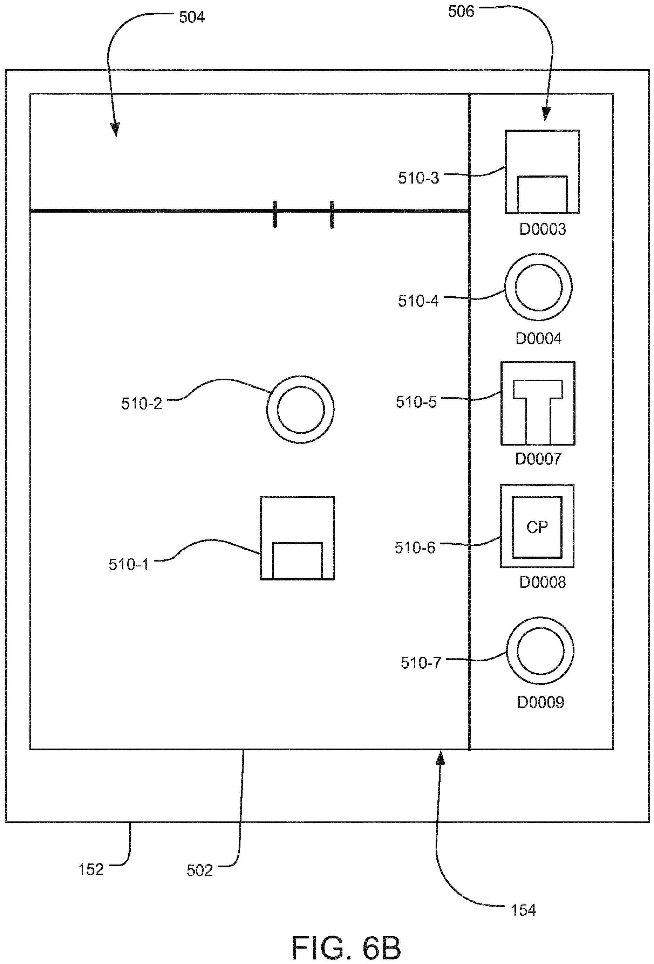

Fig. 6B is a diagram of an exemplary screen of the GUI 154 after a device indicated by the device assignment pane 506 has been assigned a position on the map in the map pane 504. The device assignment pane 506 has now been updated to include an additional graphical element 510-7 representing a smoke detector.

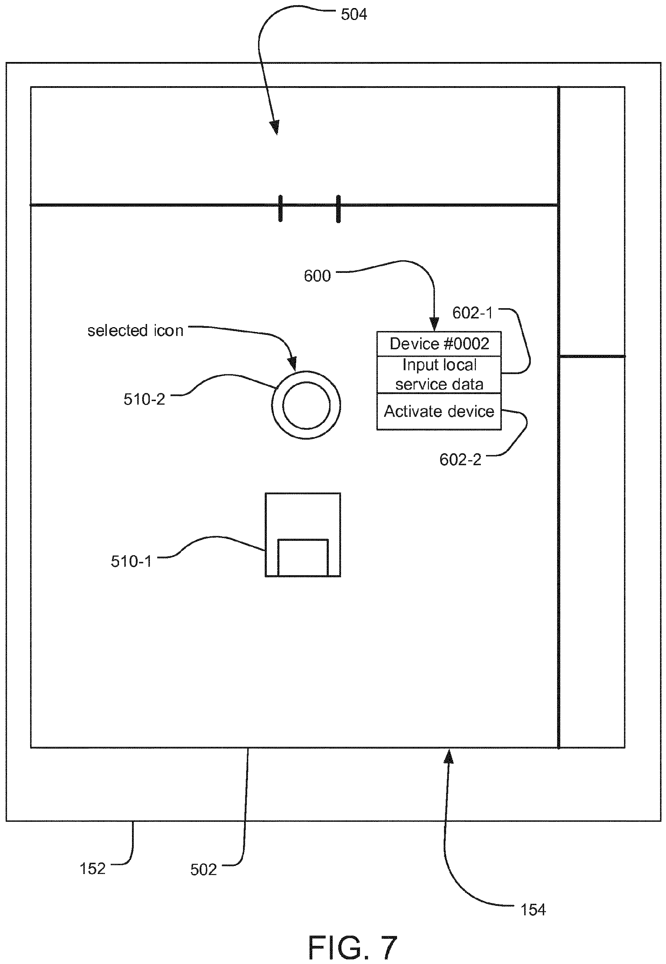

Fig. 7 is a diagram of an exemplary screen of the GUI 154 including a selection pane 600, which indicates selectable actions pertaining to each graphical element 510 and thus to each distributed device 130 and/or control panel 116. The selection pane 600 is displayed in response to selection of one of the graphical elements 510 representing devices, and includes text identifying the selected device (for example, the device ID) and virtual buttons 602 representing actions. The virtual buttons 602 are displayed as shapes containing identifying text for the corresponding action. In general, in response to the GUI 154 detecting selection of the virtual buttons 602, information and/or instructions are sent from the mobile computing device 152 to the service workflow module 110. More specifically, once selected, virtual button 602-1 proceeds to a screen of the GUI 154 (not illustrated) in which the technician 150 can enter local service data for the selected device, and virtual button 602-2 sends instructions to the service workflow module 110 to activate the selected device by sending further instructions to the device's control panel 116.

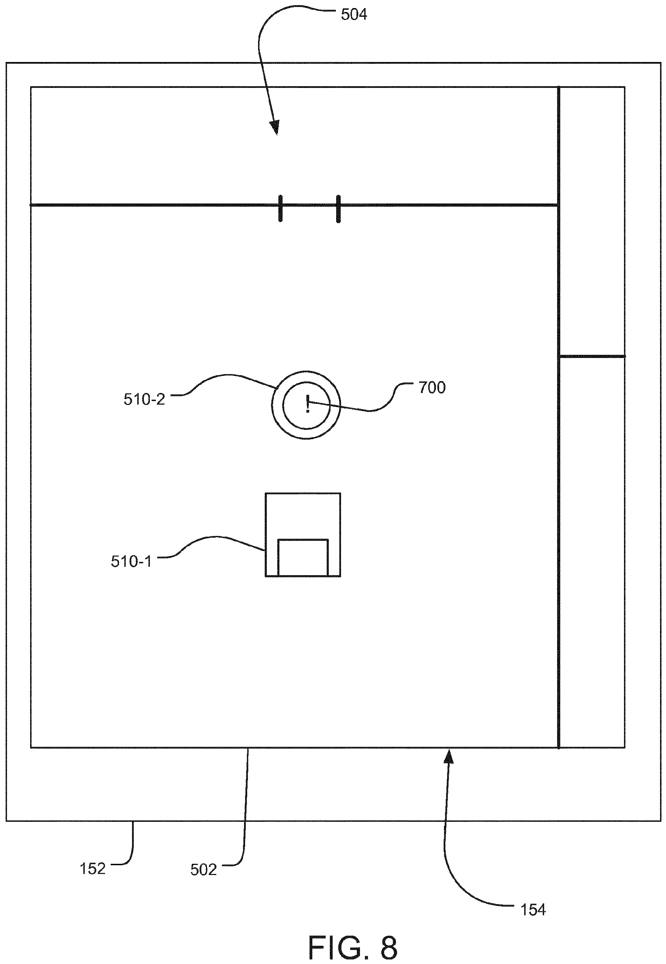

Fig. 8 is a diagram of an exemplary screen of the GUI 154 showing how the visual characteristics of the graphical elements 510 can vary based on the status of the represented device. Here, the graphical element 510-2 includes a device status indicator 700 depicted as an exclamation point. The device status indicator 700 indicates the current status of the distributed device 130 and/or control panel 116. In the illustrated example, the device status indicator 700 might indicate a problem with the smoke detector represented by graphical element 510-2.

While this invention has been particularly shown and described with references to preferred embodiments thereof, it will be understood by those skilled in the art that various changes in form and details may be made therein without departing from the scope of the invention encompassed by the appended claims.

## Claims

1. A service management system for facilitating servicing of a building management system of a building, comprising:
mobile computing devices for rendering graphical user interfaces on touchscreen displays of the mobile computing devices, wherein the graphical user interfaces display maps of the building, and detecting input indicating positions of devices of the building management system on the displayed maps to generate map position information of the devices, and displaying graphical elements on the maps representing the devices at the indicated positions; and
a service workflow module for storing the map position information of the devices.

2. The system as claimed in claim 1, wherein the maps are based on captured images of fire evacuation maps of the areas of the building.

3. The system as claimed in either of claims 1 or 2, further comprising device assignment panes of the graphical user interfaces for displaying graphical elements representing devices for which positions on the maps have not been indicated.

4. The system as claimed in any of claims 1-3, wherein visual characteristics of the graphical elements correspond to different types of devices.

5. The system as claimed in any of claims 1-4, wherein visual characteristics of the graphical elements correspond to different statuses of devices.

6. The system as claimed in any of claims 1-5, wherein the service workflow module generates service route information based on previously and/or recently serviced devices.

7. A method for facilitating servicing of building management systems of buildings, comprising:
rendering graphical user interfaces on mobile computing devices including maps of the buildings; and
detecting input indicating positions of different devices of the building management systems on the displayed maps by displaying graphical elements on the maps representing the devices at the indicated positions.

8. The method as claimed in claim 7, further comprising basing the maps on captured images of fire evacuation maps of the areas of the building.

9. The method as claimed in either of claims 7 or 8, further comprising device assignment panes of the graphical user interfaces displaying graphical elements representing devices for which positions on the maps have not been indicated.

10. The method as claimed in any of claims 7-9, wherein visual characteristics of the graphical elements correspond to different types of devices.

11. The method as claimed in any of claims 7-10, wherein visual characteristics of the graphical elements correspond to different statuses of devices.

12. The method as claimed in any of claims 7-11, further comprising the service workflow module generating service route information based on previously and/or recently serviced devices.

13. A service management system for facilitating servicing of a building management system of a building, comprising:
mobile computing devices for capturing images of posted maps in the building;
a connected services database for storing map position information of the devices based on the captured images of the posted maps.

14. A method for servicing building management systems of a building, comprising:
capturing images of posted maps in the building;
storing map position information of the devices based on the captured images of the posted maps.

15. A method for generating maps of buildings, comprising capturing one or more images of posted maps throughout the building containing floor plan details of the buildings and combining the images with satellite images of the buildings.
